# EUROPEAN PATENT APPLICATION

(11) **EP 4 411 611 A1**
(43) Date of publication of application: **07.08.2024**
(21) Application number: 23220641.7
(22) Date of filing: 28.12.2023
(51) Int. Cl.: G06Q 10/0635, G06Q 10/0637, G06Q 10/10, G06Q 40/06, G06Q 50/06

(54) **DATA AUDIT SYSTEM AND DATA AUDIT METHOD**

(30) Priority: 02.02.2023 JP 2023014604
(71) Applicant: Hitachi, Ltd., Tokyo 100-8280 (JP)
(72) Inventor: OYAMATSU, Masayuki, Tokyo 100-8280 (JP)
(74) Representative: Mewburn Ellis LLP

(57) **Abstract**

An object is to ensure reliability of collected data and a calculated indicator while remarkably reducing time and effort required from people. A data audit system receives approval information indicating that approval is received from a third party for an indicator calculation rule for calculating an indicator to evaluate a project and a data collection rule for collecting data used to calculate the indicator, collects, based on the data collection rule for which the approval is received, the data used to calculate the indicator from operation information of a subject facility of the project, and calculates the indicator based on the indicator calculation rule and the collected data.

## Description

### CLAIM OF PRIORITY

The present application claims priority from Japanese patent application JP 2023-014604 filed on February 2, 2023, the content of which is hereby incorporated by reference into this application.

### BACKGROUND OF THE INVENTION

### 1. Field of the Invention

The present invention relates to a data audit system and a data audit method.

### 2. Description of Related Art

JP2021-9696A (PTL 1) is a related art of the invention. This publication discloses that "A management support system provides an ESG management support service for supporting ESG management of a subject company through an information processing terminal connected via a communication network such as the Internet. The system collects ESG information on a specific company as quantitative data and outputs information based on the data (for example, a degree of achievement of an ESG target of each indicator, ESG data and financial data of each indicator, a result of correlation analysis thereof, and a future forecast)" (see Abstract).

### Citation List

### Patent Literature

PTL 1: JP2021-9696A

### SUMMARY OF THE INVENTION

The technique disclosed in PTL 1 collects the ESG data and the financial data, and generates information based on the collected data, but PTL1 does not disclose any mechanism for ensuring reliability of the collected data and the information generated from the collected data, such as whether the ESG data and the financial data are appropriately collected and whether the information based on the collected data is appropriately generated.

The ESG data and the financial data are usually a vast amount of data, and information is usually generated frequently from the collected data. In such cases, manually auditing the collected data and the generated information to ensure the reliability mentioned above requires much time and effort. Therefore, one aspect of the invention ensures reliability of collected data and a calculated indicator while remarkably reducing time and effort required from people.

In order to solve the above problems, one aspect of the invention adopts the following configuration. A data audit system includes: a processor; and a memory, in which the memory retains an indicator calculation rule for calculating an indicator to evaluate a project, a data collection rule for collecting data used to calculate the indicator, and operation information on a subject facility of the project, and the processor receives approval information indicating that approval is received from a third party for the indicator calculation rule and the data collection rule, collects, based on the data collection rule for which the approval is received, the data used to calculate the indicator from the operation information, and calculates the indicator based on the indicator calculation rule and the collected data.

According to the one aspect of the invention, it is possible to ensure reliability of collected data and a calculated indicator while remarkably reducing time and effort required from people.

Problems, configurations, and effects other than those described above will become apparent in the following description of embodiments.

### BRIEF DESCRIPTION OF THE DRAWINGS

FIG. 1 is a block diagram showing a configuration example of an ESG data automatic audit system in a first embodiment;
FIG. 2 is a block diagram showing a hardware configuration example of the ESG data automatic audit system in the first embodiment;
FIG. 3 shows a data configuration example of operation information in the first embodiment;
FIG. 4 shows a data configuration example of management information in the first embodiment;
FIG. 5 shows an example of an ESG data collection program registered in a program signature ledger in the first embodiment;
FIG. 6A shows an example of an ESG indicator calculation program registered in the program signature ledger in the first embodiment;
FIG. 6B shows an example of the ESG indicator calculation program registered in the program signature ledger in the first embodiment;
FIG. 7 shows a data configuration example of the program signature ledger in the first embodiment;
FIG. 8 shows a data configuration example of project management information in the first embodiment;
FIG. 9 shows a data configuration example of ESG indicator information in the first embodiment;
FIG. 10 is a sequence diagram showing an example of overall ESG data automatic audit processing in the first embodiment;
FIG. 11 is a flowchart showing an example of registered program execution processing in the first embodiment;
FIG. 12 shows a screen configuration example of an ESG indicator display screen in the first embodiment;
FIG. 13 is a block diagram showing a configuration example of an ESG data automatic audit system in a second embodiment; and
FIG. 14 is a flowchart showing an example of reliability analysis processing in the second embodiment.

### DESCRIPTION OF EMBODIMENTS

Hereinafter, embodiments of the invention will be described in detail with reference to the drawings. In the present embodiment, the same components are denoted by the same reference numerals in principle, and repeated description thereof is omitted. It should be noted that the present embodiment is merely an example for implementing the invention and does not limit the technical scope of the invention.

### First Embodiment

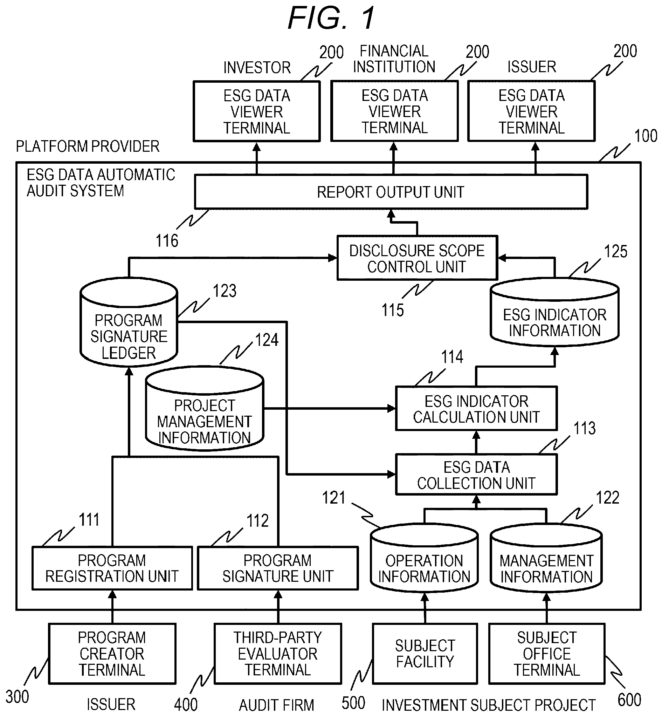

FIG. 1 is a block diagram showing a configuration example of an environment social governance (ESG) data automatic audit system. An ESG data automatic audit system 100 registers an ESG indicator calculation program (an example of an indicator calculation rule) for calculating an ESG indicator which is an indicator for evaluating an ESG project (hereinafter, also simply referred to as a project) that is an investment subject, and an ESG data collection program (an example of a data collection rule) for collecting ESG data related to the project in order to calculate the ESG indicator. The ESG data automatic audit system 100 executes the ESG data collection program to collect the ESG data and executes the ESG indicator calculation program to calculate the ESG indicator. The ESG data automatic audit system 100 is owned by, for example, a platform provider that provides a platform for ESG investment.

The ESG data automatic audit system 100 is connected to an ESG data viewer terminal 200, a program creator terminal 300, a third-party evaluator terminal 400, a subject facility 500, and a subject office terminal 600 via a network such as the Internet.

The ESG data viewer terminal 200 is owned by, for example, an investor that invests in the project, an issuer of a bond that is a subject of ESG investment, or a financial institution that mediates between the investor and the issuer. The program creator terminal 300 is owned by, for example, an issuer. The third-party evaluator terminal 400 is owned by an audit firm or the like. The subject facility 500 is a facility that is an investment subject of the project. The subject office terminal 600 is a terminal provided in an office that is an investment subject of the project.

The ESG data automatic audit system 100 includes, for example, a program registration unit 111, a program signature unit 112, an ESG data collection unit 113, an ESG indicator calculation unit 114, a disclosure scope control unit 115, and a report output unit 116, all of which are functional units. The ESG data automatic audit system 100 retains, for example, operation information 121, management information 122, a program signature ledger 123, project management information 124, and ESG indicator information 125.

The program registration unit 111 registers, in the program signature ledger 123, the ESG data collection program and the ESG indicator calculation program based on information received from the program creator terminal 300. The program signature unit 112 acquires approval from the third-party evaluator terminal 400 for the ESG data collection program and the ESG indicator calculation program.

The ESG data collection unit 113 collects the ESG data of the project from at least one of the operation information 121 and the management information 122 according to the ESG data collection program registered in the program signature ledger 123. The ESG indicator calculation unit 114 calculates the ESG indicator of the project according to the ESG indicator calculation program registered in the program signature ledger 123 and registers the ESG indicator in the ESG indicator information 125.

The disclosure scope control unit 115 determines a disclosure scope of the ESG indicator information 125. The report output unit 116 generates information visualizing the ESG indicator information 125 and displays the generated information on the ESG data viewer terminal 200. The report output unit 116 may determine generation of the information visualizing the ESG indicator information 125 and a display destination (ESG data viewer terminal 200) of the generated information in consideration of the disclosure scope determined by the disclosure scope control unit 115.

The operation information 121 indicates information on an operation of the subject facility 500 that is the investment subject facility of the project. For example, the subject facility 500 periodically transmits the information on the operation to the ESG data automatic audit system 100, and the ESG data automatic audit system 100 registers the received information in the operation information 121. The management information 122 indicates information on management of the subject office that is the investment subject office of the project. For example, the subject office terminal 600 periodically transmits the information on the management of the subject office to the ESG data automatic audit system 100, and the ESG data automatic audit system 100 registers the received information in the management information 122.

The program signature ledger 123 indicates information on the ESG data collection program and the ESG indicator calculation program. The project management information 124 indicates information on the project. The ESG indicator information 125 indicates information on the ESG indicator calculated by the ESG indicator calculation unit 114.

For example, a part of apparatuses of the ESG data automatic audit system 100, the ESG data viewer terminal 200, the program creator terminal 300, the third-party evaluator terminal 400, the subject facility 500, and the subject office terminal 600 may be integrated.

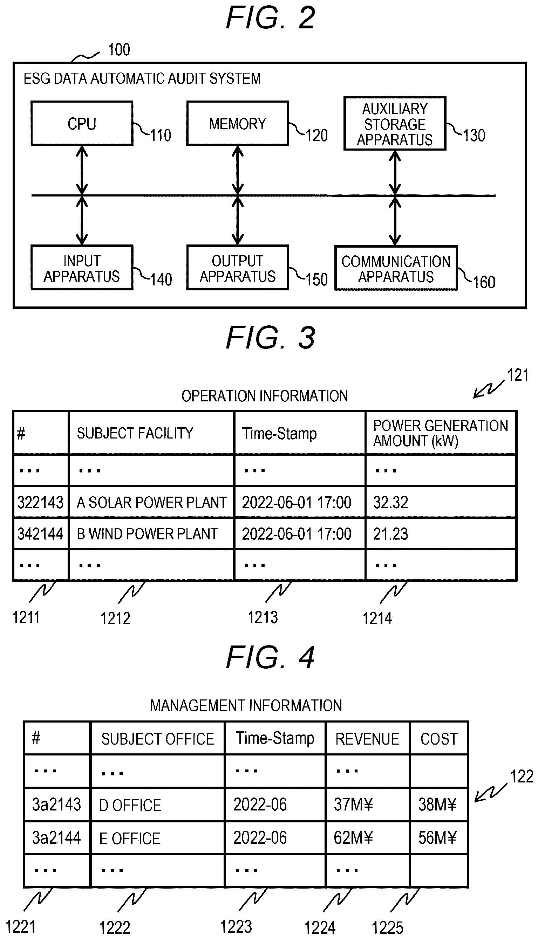

FIG. 2 is a block diagram showing a hardware configuration example of the ESG data automatic audit system 100. The ESG data automatic audit system 100 includes a computer including, for example, a central processing unit (CPU) 110, a memory 120, an auxiliary storage apparatus 130, an input apparatus 140, an output apparatus 150, and a communication apparatus 160.

The CPU 110 includes a processor and executes a program stored in the memory 120. The memory 120 includes a read only memory (ROM), which is a non-volatile storage element, and a random access memory (RAM), which is a volatile storage element. The ROM stores an immutable program (for example, basic input/output system (BIOS)) and the like. The R_AM is a high-speed volatile storage element such as a dynamic random access memory (DRAM) and temporarily stores a program to be executed by the CPU 110 and data used when the program is executed.

The auxiliary storage apparatus 130 is a large-capacity and non-volatile storage apparatus such as a magnetic storage apparatus (hard disk drive (HDD)) or a flash memory (solid state drive (SSD)), and stores a program to be executed by the CPU 110 and data used when the program is executed. That is, the program is read from the auxiliary storage apparatus 130, loaded into the memory 120, and executed by the CPU 110.

The input apparatus 140 is an apparatus such as a keyboard or a mouse, which receives an input from an operator. The output apparatus 150 is an apparatus such as a display apparatus or a printer, which outputs a program execution result in a format visually recognizable by the operator.

The communication apparatus 160 is a network interface apparatus that controls communication with another apparatus according to a predetermined protocol. The communication apparatus 160 may include a serial interface such as a universal serial bus (USB).

A part or all of programs executed by the CPU 110 may be provided to the ESG data automatic audit system 100 from a removable medium (CD-ROM, flash memory, or the like), which is a non-transitory storage medium, or an external computer including a non-transitory storage apparatus via a network, and may be stored in the non-volatile auxiliary storage apparatus 130, which is the non-transitory storage medium. Therefore, the ESG data automatic audit system 100 may include an interface for reading data from the removable medium.

The ESG data automatic audit system 100 is a computer system implemented on one physical computer or a plurality of logical or physical computers, and may operate on the same computer in separate threads or on a virtual computer constructed on a plurality of physical computer resources.

The CPU 110 includes, for example, the program registration unit 111, the program signature unit 112, the ESG data collection unit 113, the ESG indicator calculation unit 114, the disclosure scope control unit 115, and the report output unit 116, which are the functional units described above. For example, the CPU 110 functions as the program registration unit 111 by operating according to a program registration program loaded into the memory 120, and functions as the program signature unit 112 by operating according to a program signature program loaded into the memory 120. For other functional units in the CPU 110, relationships between programs and the functional units are the same.

A part or all of functions of the functional units in the CPU 110 may be implemented by hardware such as an application specific integrated circuit (ASIC) or a field-programmable gate array (FPGA).

The auxiliary storage apparatus 130 retains, for example, the operation information 121, the management information 122, the program signature ledger 123, the project management information 124, and the ESG indicator information 125 described above. A part or all of the information stored in the auxiliary storage apparatus 130 may be stored in the memory 120 or may be stored in an external database connected to the ESG data automatic audit system 100.

In the present embodiment, information used by the ESG data automatic audit system 100 may be expressed by any data structure without depending on the data structure. For example, the information can be stored by a data structure appropriately selected from a table, a list, a database, or a queue.

FIG. 3 shows a data configuration example of the operation information 121. FIG. 3 shows an example of the operation information 121 in a case where the subject facility 500 is a renewable energy power generation facility and an activity quantity of the subject facility 500 (ESG data of the subject facility 500) for calculating the ESG indicator is an amount of power generated by the renewable energy power generation facility.

The operation information 121 includes, for example, a number column 1211, a subject facility column 1212, a time-stamp column 1213, and a power generation amount column 1214. The number column 1211 retains a number for identifying a record of the operation information 121. The subject facility column 1212 retains information for identifying the subject facility 500.

The time-stamp column 1213 indicates a reference time point when power generation with a power generation amount indicated by the power generation amount column 1214 by the subject facility 500 indicated by the subject facility column 1212 is performed. The power generation amount column 1214 retains information indicating a power generation amount of the subject facility 500 indicated by the subject facility column 1212 during a period with a predetermined length including the reference time point indicated by the time-stamp column 1213 (for example, a period from one hour before the reference time point to the reference time point).

FIG. 4 shows a data configuration example of the management information 122. In the example in FIG. 4, revenue and cost of a subject office are stored in the management information 122 as management indicators. The management information 122 includes, for example, a number column 1221, a subject office column 1222, a time-stamp column 1223, a revenue column 1224, and a cost column 1225. The number column 1221 retains a number for identifying a record of the management information 122. The subject office column 1222 retains information for identifying the subject office.

The time-stamp column 1223 indicates a reference time point (a reference month in the example in FIG. 4) when the revenue and the cost are incurred by the subject office indicated by the subject office column 1222. The revenue column 1224 retains information indicating the revenue incurred by the subject office indicated by the subject office column 1222 during a period with a predetermined length including the reference time point indicated by the time-stamp column 1223 (for example, the reference month shown in FIG. 4). The cost column 1225 retains information indicating the cost incurred by the subject office indicated by the subject office column 1222 during a period with a predetermined length including the reference time point indicated by the time-stamp column 1223 (for example, the reference month shown in FIG. 4).

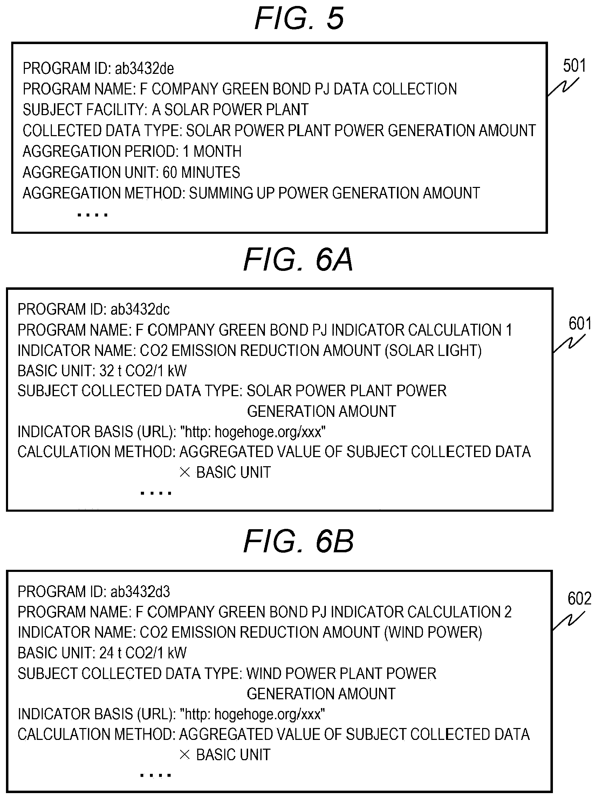

FIG. 5 shows an example of the ESG data collection program registered in the program signature ledger 123. An ESG data collection program 501 describes, for example, a program ID and a program name of the ESG data collection program 501, a type of data collected by the ESG data collection program 501, the subject facility 500 that is an ESG data collection subject of the ESG data collection program 501, and an aggregation period, an aggregation unit, and an aggregation method of the ESG data of the collection subject.

Processing described in the ESG data collection program 501 in FIG. 5 is processing of "summing up power generation amount" of the subject facility 500, that is, "A solar power plant" indicated by the operation information 121, and the "summing up power generation amount" is performed for a power generation amount in an aggregation period of "one month" (for example, the most recent month) for each aggregation unit of "60 minutes" (the power generation amount corresponding to the aggregation unit and the aggregation period is summed up with reference to the time-stamp indicated by the operation information 121).

For example, if it is described in the ESG data collection program 501 that the revenue and the cost of the subject office, which is the ESG data collection subject, are further collected, and a calculation method is described as "summing up power generation amount and dividing summed power generation amount by (revenue - cost)", the ESG data collection program 501 refers to the operation information 121 and the management information 122, and collects the ESG data in consideration of a management indicator such as a monthly power generation amount per profit of the subject office (and thus the ESG indicator in consideration of the management indicator is calculated).

FIG. 6A shows an example of the ESG indicator calculation program registered in the program signature ledger 123. An ESG indicator calculation program 601 describes, for example, a program ID and a program name of the ESG indicator calculation program 601, a name of the ESG indicator calculated by the ESG indicator calculation program 601, a basic unit used to calculate the ESG indicator, a type of subject collected data used to calculate the ESG indicator, a numerical value of the basic unit of the ESG indicator, an indicator basis indicating a basis of a calculation method, and the calculation method for a value of the ESG indicator.

Processing described in the ESG indicator calculation program 601 in FIG. 6A is processing of calculating a "CO2 emission reduction amount (solar light)" based on "aggregated value of subject collected data × basic unit" aggregated in the ESG data collection program whose type of collected data is "solar power plant power generation amount", and the basic unit thereof is "32 t CO2/1 kW". That is, for example, the CO2 emission reduction amount (solar light) is calculated by multiplying the sum of the power generation amount calculated by the ESG data collection program 501 by 32 t CO2/1 kW. When there are a plurality of ESG data collection programs whose type of collected data is "solar power plant power generation amount", for example, the CO2 emission reduction amount is calculated by multiplying a sum of aggregated values of the plurality of ESG data collection programs by the basic unit.

Since the above-described indicator basis is described in the ESG indicator calculation program 601, when a third-party evaluator approves the ESG indicator calculation program 601, it is possible to easily check the ESG indicator calculation method, the basic unit, and the like described in the ESG indicator calculation program 601.

FIG. 6B shows an example of the ESG indicator calculation program registered in the program signature ledger 123. Items described in an ESG indicator calculation program 602 are the same as those in the ESG indicator calculation program 601, for example.

Processing described in the ESG indicator calculation program 602 in FIG. 6B is processing of calculating a "CO2 emission reduction amount (wind power)" based on "aggregated value of subject collected data × basic unit" aggregated in the ESG data collection program whose type of collected data is "wind power plant power generation amount", and the basic unit thereof is "24 t CO2/1 kW". When there are a plurality of ESG data collection programs whose type of collected data is "wind power plant power generation amount", for example, the CO2 emission reduction amount is calculated by multiplying a sum of aggregated values of the plurality of ESG data collection programs by the basic unit.

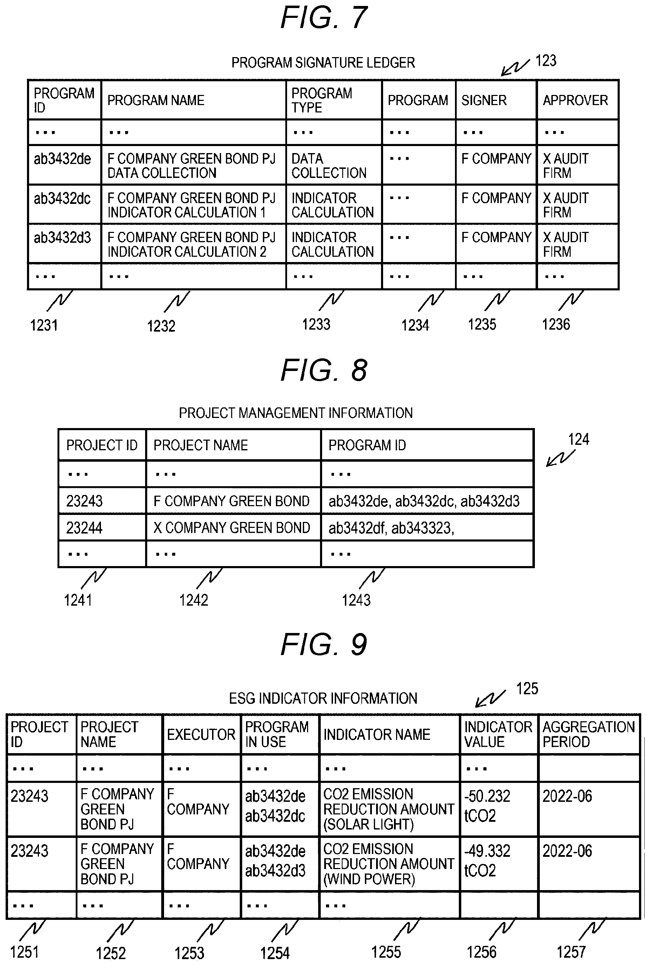

FIG. 7 shows a data configuration example of the program signature ledger 123. The program signature ledger 123 includes, for example, a program ID column 1231, a program name column 1232, a program type column 1233, a program column 1234, a signer column 1235, and an approver column 1236.

The program ID column 1231 retains an ID for identifying a program. The program name column 1232 retains information indicating a program name. The program type column 1233 retains information for identifying a program type ("data collection" for the ESG data collection program, and "indicator calculation" for the ESG indicator calculation program). The program column 1234 retains the program.

The signer column 1235 retains information indicating a signer who signs the program (for example, a creator of the program such as an issuer or a platform provider may be the signer). The approver column 1236 retains information indicating an approver who approves the program (for example, a third-party evaluator such as an audit firm may be the approver).

The program signature ledger 123 may further retain a signature value of the signer, a signature value certifying the approval of the approver, a time-stamp certifying that the program is not tampered with after the approval, and the like. The signature value, the time-stamp, and the like may be directly embedded in the program.

FIG. 8 shows a data configuration example of the project management information 124. The project management information 124 includes, for example, a project ID column 1241, a project name column 1242, and a program ID column 1243. The project ID column 1241 retains a project ID for identifying a project. The project name column 1242 retains information indicating a project name.

The program ID column 1243 retains program IDs of programs used for ESG data collection and ESG data indicator calculation in the project. The project management information 124 may further retain information indicating the subject facility 500 of the project, information indicating a subject office of the project, and the like.

FIG. 9 shows a data configuration example of the ESG indicator information 125. The ESG indicator information 125 includes, for example, a project ID column 1251, a project name column 1252, an executor column 1253, a program-in-use column 1254, an indicator name column 1255, an indicator value column 1256, and an aggregation period column 1257.

The project ID column 1251 retains a project ID. The project name column 1252 retains information indicating a project name. The executor column 1253 retains information indicating an executor of a program in use (a person (for example, a platform provider or an issuer) who owns a terminal that executes the program in use).

The program-in-use column 1254 retains a program ID of the ESG indicator calculation program used to calculate an ESG indicator value shown in the indicator value column 1256, and a program ID of the ESG data collection program used to collect the ESG data for calculating the ESG indicator value. In the program-in-use column 1254, for example, the program ID of the ESG indicator calculation program and the program ID of the ESG data collection program may be managed in a distinguishable manner. In addition, the program-in-use column 1254 may only retain the program ID of one of the ESG indicator calculation program and the ESG data collection program.

The indicator name column 1255 retains information indicating a name of the calculated ESG indicator. The indicator value column 1256 retains information indicating a value of the ESG indicator calculated by the ESG indicator calculation program. The aggregation period column 1257 retains information indicating the aggregation period of the collection subject data collected by the ESG data collection program in order to calculate the ESG indicator.

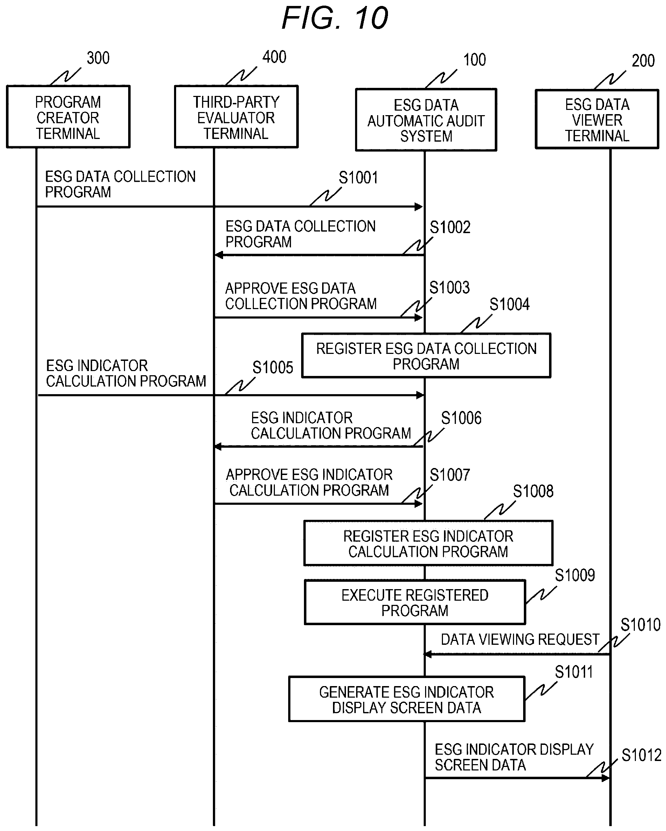

FIG. 10 is a sequence diagram showing an example of overall ESG data automatic audit processing. Before the processing in FIG. 10 starts, values are registered in advance in the operation information 121 and the management information 122, and values in the project ID column 1241 and the project name column 1242 in the project management information 124 are registered in advance.

For example, the program creator terminal 300 creates the ESG data collection program according to an input from a user of the program creator terminal 300 and transmits the created ESG data collection program to the ESG data automatic audit system 100 together with accompanying information (S1001).

In step S1001, the program creator terminal 300 receives an input of the project ID and the program type ("data collection") from the user of the program creator terminal 300, and the received project ID and the received program type are included in the accompanying information.

When the program creator terminal 300 signs the ESG data collection program, information indicating the signer (the user or an owner of the program creator terminal 300) may be provided in the accompanying information and the signature value may be embedded in the ESG data collection program or provided in the accompanying information.

The program signature unit 112 of the ESG data automatic audit system 100 transmits the received ESG data collection program to the third-party evaluator terminal 400 (S1002). The program registration unit 111 may transmit, to the third-party evaluator terminal 400, the corresponding project name in the project management information 124 corresponding to the project ID indicated by the received accompanying information and information indicating the signer indicated by the accompanying information.

The third-party evaluator terminal 400 displays the information received from the ESG data automatic audit system 100 in step S1002 and transmits, when an input of information indicating approval from a user of the third-party evaluator terminal 400 is received, approval information indicating that the ESG data collection program is approved (for example, information indicating the approver (the user or an owner of the third-party evaluator terminal 400), the signature value of the approver, or the time-stamp) to the ESG data automatic audit system 100 (S1003).

The program registration unit 111 of the ESG data automatic audit system 100 registers the program ID of the approved ESG data collection program in the project management information 124 in association with the project ID and registers the approved ESG data collection program and the accompanying information in the program signature ledger 123 (S1004).

For example, the program creator terminal 300 creates the ESG indicator calculation program according to an input from the user of the program creator terminal 300 and transmits the created ESG indicator calculation program to the ESG data automatic audit system 100 together with accompanying information (S1005).

In step S1005, the program creator terminal 300 receives an input of the project ID and the program type ("indicator calculation") from the user of the program creator terminal 300, and the received project ID and the received program type are included in the accompanying information.

When the program creator terminal 300 signs the ESG indicator calculation program, information indicating the signer (the user or the owner of the program creator terminal 300) may be provided in the accompanying information and the signature value may be embedded in the ESG indicator calculation program or provided in the accompanying information.

The program signature unit 112 of the ESG data automatic audit system 100 transmits the received ESG indicator calculation program to the third-party evaluator terminal 400 (S1006). The program registration unit 111 may transmit, to the third-party evaluator terminal 400, the corresponding project name in the project management information 124 corresponding to the project ID indicated by the received accompanying information and the information indicating the signer indicated by the accompanying information.

The third-party evaluator terminal 400 displays the information received from the ESG data automatic audit system 100 in step S1006 and transmits, when an input of information indicating approval from the user of the third-party evaluator terminal 400 is received, information indicating that the ESG indicator calculation program is approved (for example, information indicating the approver (the user or the owner of the third-party evaluator terminal 400) or the signature value of the approver) to the ESG data automatic audit system 100 (S1007).

The program registration unit 111 of the ESG data automatic audit system 100 registers the program ID of the approved ESG indicator calculation program in the project management information 124 in association with the project ID and registers the approved ESG indicator calculation program and the accompanying information in the program signature ledger 123 (S1008).

In the above example, the program creator terminal 300 creates the ESG data collection program and the ESG indicator calculation program, but the ESG data automatic audit system 100 may create these programs according to an input of a user (for example, a platform provider) of the ESG data automatic audit system 100. That is, an entity executing the processing in steps S1001 and S1005 may be the ESG data automatic audit system 100.

The program creator terminal 300 may receive inputs of the ESG data collection program and the ESG indicator calculation program written in a program language and transmit the inputs to the ESG data automatic audit system 100, or the program creator terminal 300 may receive an input of a parameter necessary for creating the ESG data collection program and the ESG indicator calculation program and transmit the parameter to the ESG data automatic audit system 100, and the program registration unit 111 may create (write in the program language) the ESG data collection program and the ESG indicator calculation program according to the parameter.

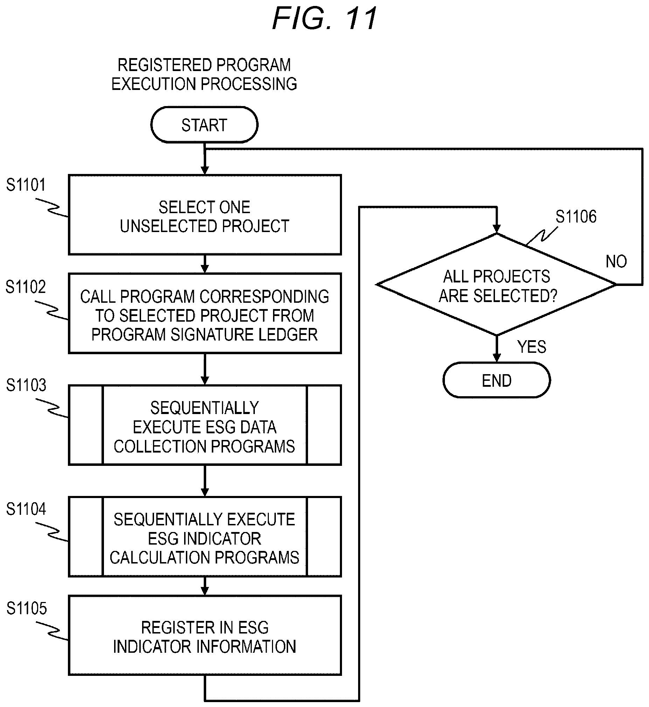

The ESG data automatic audit system 100 executes the programs registered in the program signature ledger 123 (S1009). Details of step S1009 will be described later with reference to FIG. 11. The ESG data viewer terminal 200 transmits a data viewing request to the ESG data automatic audit system 100 according to, for example, an input of a user of the ESG data viewer terminal 200 (S1010).

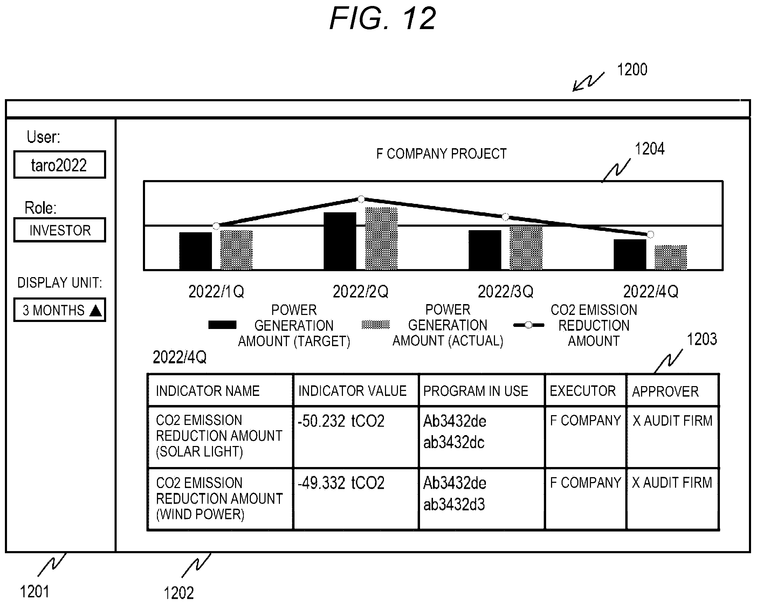

The report output unit 116 of the ESG data automatic audit system 100 generates data for outputting an ESG indicator display screen (S1011) and transmits the data to the ESG data viewer terminal 200 that transmits the data viewing request, thereby displaying the ESG indicator display screen on the ESG data viewer terminal 200 (S1012). Details of the ESG indicator display screen will be described later with reference to FIG. 12.

The disclosure scope control unit 115 may determine the disclosure scope, and the report output unit 116 may execute the processing in steps S1011 and S1012 based on the disclosure scope. For example, the project management information 124 may store information indicating an investor who invests in each project, the disclosure scope control unit 115 may determine the disclosure scope to be only the ESG data viewer terminal 200 owned by the investor among ESG data viewer terminals 200 that transmit the data viewing request, and the report output unit 116 may transmit the data for outputting the ESG indicator display screen only to the ESG data viewer terminal 200 owned by the investor.

For example, information for identifying an ESG data viewer permitted to view may be registered for each indicator name of the ESG indicator in advance in the ESG data automatic audit system 100. The disclosure scope control unit 115 may determine the disclosure scope to be only the ESG indicator permitted to the ESG data viewer terminal 200 that transmits the data viewing request, and the report output unit 116 may create the ESG indicator display screen only for the ESG indicator indicated by the disclosure scope.

FIG. 11 is a flowchart showing an example of registered program execution processing in step S1009. The ESG data collection unit 113 refers to the project management information 124, selects one unselected project ID (S1101), and acquires a program ID corresponding to the selected project ID from the project management information 124 (S1102).

The ESG data collection unit 113 acquires, from the program signature ledger 123, all programs whose program type is "data collection", that is, ESG data collection programs among programs having the program ID acquired in step S1102, and sequentially executes the acquired ESG data collection programs (S1103). The ESG data collection unit 113 may add an executor signature to an execution result of each ESG data collection program or meta information thereof (for example, the time-stamp).

The ESG indicator calculation unit 114 acquires, from the program signature ledger 123, all programs whose program type is "indicator calculation", that is, ESG indicator calculation programs among the programs having the program ID acquired in step S1102, and sequentially executes the acquired ESG indicator calculation programs (S1104). The ESG indicator calculation unit 114 may add an executor signature to an execution result of each ESG indicator calculation program or meta information thereof (for example, the time-stamp).

The ESG indicator calculation unit 114 registers a value in the ESG indicator information 125 (S1105). Specifically, for example, the ESG indicator calculation unit 114 stores, in the ESG indicator information 125, the selected project, the project name corresponding to the project ID in the project management information 124, an executor of the ESG data collection program and the ESG indicator calculation program, the program ID acquired in step S1102, the indicator name indicated by the ESG indicator calculation program, the indicator value calculated in step S1104, and the aggregation period indicated by the ESG data collection program. As described above, when the signature is added to the execution result of the program, a signature value of the signature may also be registered in the ESG indicator information 125.

The ESG data collection unit 113 determines whether all project IDs are selected (S1106). When it is determined that there is an unselected project ID (S1106: NO), the ESG data collection unit 113 returns to step S1101, and when it is determined that all project IDs are selected (S1106: YES), the ESG data collection unit 113 ends the registered program execution processing.

FIG. 12 shows a screen configuration example of the ESG indicator display screen. An ESG indicator display screen 1200 includes, for example, an attribute display area 1201 and an ESG indicator data display area 1202. The attribute display area 1201 displays, for example, a name of the user of the ESG data viewer terminal 200 on which the ESG indicator display screen 1200 is displayed, a role of the user (here, an investor), and a unit of a display period of the ESG indicator displayed in the ESG indicator data display area 1202.

The ESG indicator data display area 1202 displays, for example, an ESG indicator table 1203 and an ESG indicator graph 1204. In the example in FIG. 12, the ESG indicator table 1203 includes the ESG indicator name, the indicator value, the program in use, and the executor indicated by the ESG indicator information 125, and the approver of the ESG indicator calculation program, through which the ESG indicator is calculated, indicated by the program signature ledger 123. The ESG indicator table 1203 may also include any item provided in the ESG indicator information 125 and the approver of the ESG data collection program through which the ESG data used by the ESG indicator calculation program is collected.

The ESG indicator graph 1204 indicates, for example, a history of a CO2 emission reduction amount, a power generation amount (actual), and a power generation amount (target). The CO2 emission reduction amount is calculated by, for example, a sum of the CO2 emission reduction amount (solar light) and the CO2 emission reduction amount (wind power) which are two ESG indicators displayed in the ESG indicator table 1203, that is, the CO2 emission reduction amount is a value obtained by combining a plurality of indicators.

The power generation amount (actual) is calculated, for example, by a sum of a power generation amount of solar power generation and a power generation amount of wind power generation, which is ESG data collected for calculating the CO2 emission reduction amount (solar light) and the CO2 emission reduction amount (wind power) that are ESG indicators, that is, the power generation amount (actual) is a value obtained by combining values of a plurality of pieces of collection subject data. The power generation amount (target) is, for example, a sum of a target value of the power generation amount of solar power generation and a target value of the power generation amount of wind power generation, and is registered in advance in the ESG data automatic audit system 100 in association with the project.

By the ESG indicator display screen 1200, a data viewer such as an investor, a financial institution, or an issuer can easily check the ESG indicator, which is an evaluation indicator of the project, and information on the ESG indicator. In particular, since the program in use and the approver are displayed on the ESG indicator display screen 1200, the data viewer can recognize that the ESG indicator is calculated using the program approved by a reliable approver.

The ESG data automatic audit system 100 according to the present embodiment executes the ESG data collection and the ESG indicator calculation by the ESG data collection program and the ESG indicator calculation program approved in advance by the third-party evaluator. Therefore, reliability of the collected data and the calculated ESG indicator can be ensured, and thus there is no need for an audit firm or the like to take time and effort to directly audit a vast amount of ESG data and the ESG indicator based on the ESG data.

The ESG data automatic audit system 100 may not be owned by a specific platform provider, and may be implemented by a plurality of computers connected by a distributed computer network, for example. That is, the information retained by the ESG data automatic audit system 100 in the first embodiment may be managed by a distributed ledger database.

The ESG data automatic audit system 100 may be able to modify the registered ESG data collection program and the registered ESG indicator calculation program. During modification of the programs, the ESG data automatic audit system 100 acquires a modification program from the program creator terminal 300, transmits the modification program to the third-party evaluator terminal 400, and receives approval for the modification program, for example, as during the registration of the programs. The ESG data automatic audit system 100 registers information on the approved modification program in the program signature ledger 123. For example, the ESG data automatic audit system 100 may also register a modification history or the like of the modification program in the program signature ledger 123.

In the present embodiment, the ESG data automatic audit system 100 executes the ESG data collection and the ESG indicator calculation related to the ESG project that is the investment subject, and the present embodiment can also be applied to data collection related to any project not limited to ESG and calculation of any indicator (an indicator based on the collected data) for evaluating the project.

### Second Embodiment

The ESG data automatic audit system 100 according to the present embodiment executes reliability analysis on a calculated ESG indicator. Hereinafter, a difference from the first embodiment will be described.

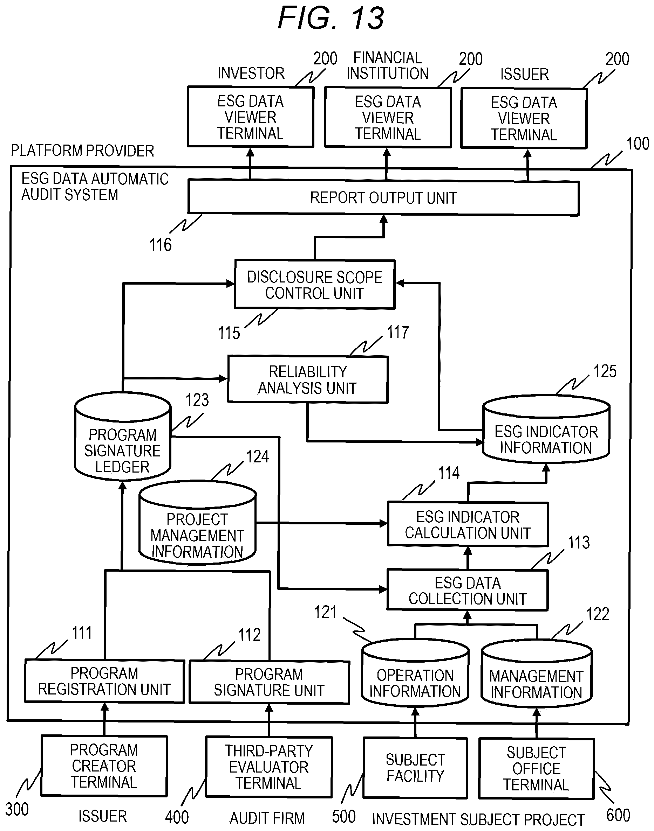

FIG. 13 is a block diagram showing a configuration example of the ESG data automatic audit system 100 according to the present embodiment. The ESG data automatic audit system 100 further includes a reliability analysis unit 117 as a functional unit. The reliability analysis unit 117 sets a reliability degree of a value of the ESG indicator in the ESG indicator information 125. Therefore, the ESG indicator information 125 in the present embodiment may include a column storing information indicating the reliability degree. For example, when outputting the ESG indicator display screen 1200, the report output unit 116 also outputs the reliability degree of the ESG indicator.

The program registration unit 111 and the program signature unit 112 may acquire a reliability analysis program for the reliability analysis unit 117 to set the reliability degree, acquire approval for the reliability analysis program, and register the reliability analysis program into the program signature ledger 123 and the project management information 124 in the same manner as the ESG data collection program and the ESG indicator calculation program.

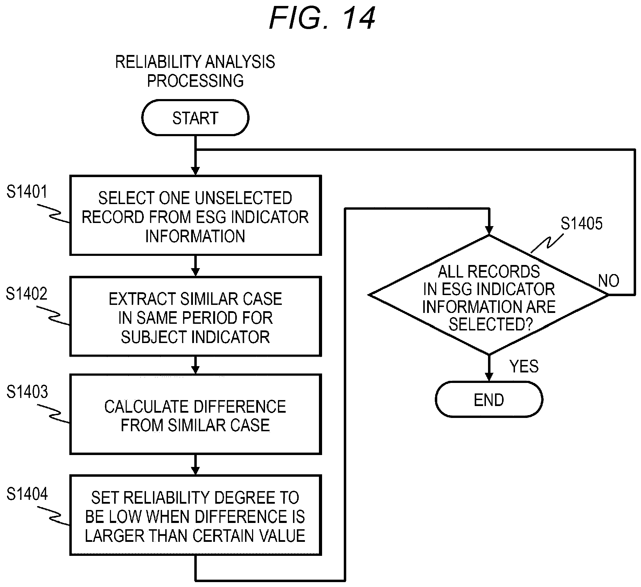

FIG. 14 is a flowchart showing an example of reliability analysis processing. The reliability analysis processing is executed, for example, after the processing in step S1009 and before the processing in step S1010 (or may be executed in the processing in step S1009 when the reliability analysis program is registered in the program signature ledger 123 and the project management information 124) .

The reliability analysis unit 117 selects one unselected record from the ESG indicator information 125 (S1401). The reliability analysis unit 117 extracts, from the ESG indicator information 125, a similar case in the same period for the ESG indicator in the selected record (S1402). Specifically, for example, a record having the same indicator name and the same aggregation period as an indicator name and an aggregation period indicated by the selected record is extracted from the ESG indicator information 125 as a record of the similar case.

The reliability analysis unit 117 calculates a difference between an ESG indicator value indicated by the record selected in the most recent step S1401 and an ESG indicator value indicated by the record of the similar case (for example, when there are a plurality of records in the similar case, an average value of ESG indicator values in the plurality of records is taken) (S1403).

When it is determined that the calculated difference is large (larger than a predetermined value), the reliability analysis unit 117 determines that a reliability degree of the ESG indicator value corresponding to the record selected in the most recent step S1401 is low, and stores information indicating that the reliability degree is low in the record of the ESG indicator information 125 (S1404). The reliability analysis unit 117 may calculate, as the reliability degree, a value that decreases as the difference increases, such as a reciprocal of the calculated difference, and store the calculated reliability degree in the record in the ESG indicator information 125.

The reliability analysis unit 117 determines whether all records in the ESG indicator information 125 are selected (S1405). When it is determined that there is an unselected record in the ESG indicator information 125 (S1405: NO), the reliability analysis unit 117 returns to step S1401, and when it is determined that all the records in the ESG indicator information 125 are selected (S1405: YES), the reliability analysis unit 117 ends the reliability analysis processing.

The ESG data automatic audit system 100 according to the present embodiment can present the reliability degree of the ESG indicator to be presented to the ESG data viewer by executing the reliability analysis on the calculated ESG indicator, and the ESG data viewer can perform business with reference to the reliability degree. In the present embodiment, the disclosure scope control unit 115 may determine to exclude, from the disclosure scope, an indicator value for which the information indicating that the reliability degree is low is set, and may present only an ESG indicator value with a higher reliability degree to the ESG data viewer.

The invention is not limited to the embodiments described above, and includes various modifications. For example, the embodiments described above have been described in detail to facilitate understanding of the invention, and the invention is not necessarily limited to those including all the configurations described above. A part of a configuration in one embodiment can be replaced with a configuration in another embodiment, and a configuration in one embodiment can also be added to a configuration in another embodiment. A part of a configuration in each embodiment may be added, deleted, or replaced with another configuration.

A part or all of configurations, functions, processing units, processing methods, and the like described above may be implemented by hardware by, for example, designing with an integrated circuit. In addition, the above configurations, functions, and the like may be implemented by software by a processor interpreting and executing a program for implementing each function. Information such as a program, a table, and a file for implementing each function can be stored in a recording apparatus such as a memory, a hard disk, or a solid state drive (SSD), or in a recording medium such as an IC card, an SD card, or a DVD.

Control lines and information lines indicate what is considered to be necessary for explanation, and not necessarily all control lines and information lines are always shown on a product. Actually, almost all configurations may be considered to be connected to one another.

## Claims

1. A data audit system comprising:
a processor; and
a memory, wherein
the memory retains
an indicator calculation rule for calculating an indicator to evaluate a project,
a data collection rule for collecting data used to calculate the indicator, and
operation information on a subject facility of the project, and
the processor
receives approval information indicating that approval is received from a third party for the indicator calculation rule and the data collection rule,
collects, based on the data collection rule for which the approval is received, the data used to calculate the indicator from the operation information, and
calculates the indicator based on the indicator calculation rule and the collected data.

2. The data audit system according to claim 1, wherein
the approval information includes information indicating an approver who approves the indicator calculation rule, and
the processor generates data for displaying information indicating the calculated indicator, the indicator calculation rule used to calculate the indicator, and the approver who approves the indicator calculation rule.

3. The data audit system according to claim 1, wherein
the indicator calculation rule describes information indicating a basis for a method of calculating the indicator.

4. The data audit system according to claim 1, wherein
the project is a subject project of ESG investment,
the memory retains management information on a subject office of the project, and
the processor collects, based on the data collection rule for which the approval is received, the data used to calculate the indicator from the operation information and the management information.

5. The data audit system according to claim 1, wherein
the memory retains information indicating a case of the indicator and an aggregation period of the data used to calculate the indicator,
the operation information indicates an operation period of the subject facility,
the data collection rule indicates a collection subject period of the data used to calculate the indicator, and
the processor
collects, from the operation information and in the period indicated by the data collection rule for which the approval is received, the data used to calculate the indicator,
specifies, based on the aggregation period indicated by the case and a period corresponding to the calculated indicator, an indicator of a similar case corresponding to the calculated indicator, and
compares the indicator of the similar case with the calculated indicator to calculate a reliability degree of the calculated indicator.

6. A data audit method implemented by a data audit system, wherein
the data audit system includes a processor and a memory,
the memory retains
an indicator calculation rule for calculating an indicator to evaluate a project,
a data collection rule for collecting data used to calculate the indicator, and
operation information on a subject facility of the project, and
the data audit method comprises:
receiving, by the processor, approval information indicating that approval is received from a third party for the indicator calculation rule and the data collection rule;
collecting, by the processor based on the data collection rule for which the approval is received, the data used to calculate the indicator from the operation information; and
calculating the indicator by the processor based on the indicator calculation rule and the collected data.

7. The data audit method according to claim 6, wherein
the approval information includes information indicating an approver who approves the indicator calculation rule, and
the data audit method further comprises generating, by the processor, data for displaying information indicating the calculated indicator, the indicator calculation rule used to calculate the indicator, and the approver who approves the indicator calculation rule.

8. The data audit method according to claim 6, wherein
the indicator calculation rule describes information indicating a basis for a method of calculating the indicator.

9. The data audit method according to claim 6, wherein
the project is a subject project of ESG investment,
the memory retains management information on a subject office of the project, and
the data audit method further comprises collecting, by the processor based on the data collection rule for which the approval is received, the data used to calculate the indicator from the operation information and the management information.

10. The data audit method according to claim 6, wherein
the memory retains information indicating a case of the indicator and an aggregation period of the data used to calculate the indicator,
the operation information indicates an operation period of the subject facility,
the data collection rule indicates a collection subject period of the data used to calculate the indicator, and
the data audit method further comprises:
collecting by the processor, from the operation information and in the period indicated by the data collection rule for which the approval is received, the data used to calculate the indicator;
specifying by the processor, based on the aggregation period indicated by the case and a period corresponding to the calculated indicator, an indicator of a similar case corresponding to the calculated indicator; and
comparing, by the processor, the indicator of the similar case with the calculated indicator to calculate a reliability degree of the calculated indicator.
